# EUROPEAN PATENT SPECIFICATION

(11) **EP 3 246 525 B1**
(45) Date of publication and mention of the grant of the patent: **08.07.2020**
(21) Application number: 17170029.7
(22) Date of filing: 09.05.2017
(51) Int. Cl.: F01D 17/24, F02C 7/32, H02K 5/173, H02K 7/18, H02K 9/19, F01D 15/10

(54) **GAS TURBINE ENGINES WITH FLUTTER CONTROL**
GASTURBINENMOTOR MIT FLATTERKONTROLLE
MOTEURS À TURBINE À GAZ AYANT UNE COMMANDE DE FLOTTEMENT

(30) Priority: 18.05.2016 US 201662338201 P; 18.05.2016 US 201662338204 P; 18.05.2016 US 201662338205 P; 13.12.2016 US 201662433576 P
(43) Date of publication of application: 22.11.2017
(73) Proprietor: Rolls-Royce Corporation, Indianapolis, Indiana 46225 (US); Rolls-Royce North American Technologies, Inc., Indianapolis, IN 46241 (US)
(72) Inventor: Klemen, Donald, Carmel, IN 46033 (US); Armstrong, Michael J., Avon, IN 46123 (US)
(74) Representative: Gille Hrabal

(56) References cited:
- EP-A1- 2 887 536
- EP-A1- 2 889 452
- EP-A2- 2 194 290
- US-A- 5 005 353

## Description

### FIELD OF THE DISCLOSURE

The present disclosure relates generally to gas turbine engines, and more specifically to gas turbine engines with flutter control.

### BACKGROUND

Gas turbine engines are used to power aircraft, watercraft, electrical generators, and the like. Gas turbine engines typically include a compressor, a combustor, and a turbine. The compressor compresses air drawn into the engine and delivers high pressure air to the combustor. In the combustor, fuel is mixed with the high pressure air and is ignited. Exhaust products of the combustion reaction in the combustor are directed into the turbine where work is extracted to drive the compressor and, sometimes, an output shaft, fan, or propeller. Under certain conditions, undesirable movement, such as flutter, can occur within the engine.

EP 2 889 452 A1 discloses a gas turbine engine comprising a spool assembly for rotation about an axis, the spool assembly including an LP turbine spool having an LP drive shaft extending along the axis, a fan coupled with the LP drive shaft to receive rotation to draw air into the gas turbine engine, the fan including a rotor and a-number of blades extending radially from the rotor, and a motor-generator assembly including an LP motor-generator mounted on the LP drive shaft. EP 2 887 536 A1 discloses a control system for a dual redundant motor/generator assembly and teaches to dampen out excessive oscillations.

### SUMMARY

The present subject matter comprises the features of claim 1.

According to claim 1, a gas turbine engine includes a spool assembly for rotation about an axis, the spool assembly including an LP turbine spool having an LP drive shaft extending along the axis, a fan coupled with the LP drive shaft to receive rotation to draw air into the gas turbine engine, the fan including a rotor and the number of blades extending radially from the rotor, a motor-generator assembly including an LP motor-generator mounted on the LP drive shaft, a sensor configured to detect flutter movement within the engine, and a power controller in communication with the sensor and electrically connected to the LP motor-generator to detect, the power controller configured to selectively operate the LP motor-generator in response to flutter movement detected by the sensor to counteract flutter.

In some embodiments, the LP motor-generator may be adapted for selective operation between a generation mode to generate electric power from driven rotation and a drive mode to electrically drive rotation of the LP drive shaft, and the power controller is configured to selectively operate the LP motor-generator in either of the generation mode and the drive mode to counteract flutter.

According to claim 1, the power controller includes power circuitry adapted to selective operate the LP motor-generator and a control module in communication with the sensor to receive an indication of flutter movement and with the power circuity to govern selective operation of the LP motor-generator.

The control module is configured to determine a cancelation torque response for application to the LP drive shaft required to counteract flutter movement of the LP drive shaft.

In some embodiments, the control module may govern operation of the LP motor-generator to execute the cancelation torque response onto the LP drive shaft.

According to claim 1, operation of the LP motor-generator to achieve the cancelation torque response may include selectively dampening rotation of the LP drive shaft by oscillating operation of the LP motor-generator between a first power output and a second power output higher than the first.

In some embodiments, oscillating operation of the LP motor-generator between the first power output and the second power output may include operation of the LP motor-generator in a generation mode to generate electric power from driven rotation.

In some embodiments, oscillating operation of the LP motor-generator between the first power output and the second power output may include operation of the LP motor-generator in a drive mode to electrically drive rotation of the LP drive shaft.

In some embodiments, the sensor may configured to detect flutter movement within the blades of the fan. In some embodiments, the sensor may be arranged to detect flutter movement of the LP drive shaft and to communicate a signal indicating the flutter movement to the power controller.

According to another aspect of the present disclosure, a turbofan gas turbine engine may include a low pressure spool including a fan rotor, a low pressure turbine rotor, a low pressure drive shaft extending along an axis and rotationally coupling the fan rotor to receive driven rotation about the axis from the low pressure turbine rotor, and a low pressure motor-generator mounted on the low pressure drive shaft and adapted for selective operation between a generation mode to generate electric power from driven rotation of the low pressure turbine rotor and a drive mode to electrically drive rotation of the low pressure drive shaft, a high pressure spool including a compressor rotor, a high pressure turbine rotor, a high pressure drive shaft extending along the axis and rotationally coupling the compressor rotor to receive driven rotation about the axis from the high pressure turbine rotor, and an high pressure motor-generator adapted for selective operation between a generation mode to generate electric power from driven rotation of the high pressure turbine rotor and a drive mode to electrically drive rotation of the high pressure drive shaft, and a flutter control system electrically connected to the low pressure motor-generator and the high pressure motor-generator and configured to determine operational conditions of the engine and to selectively operate each of the low pressure motor-generator and the high pressure motor-generator in either of the generation mode and the drive mode based on the determined operational conditions of the engine. Thee flutter control system may include a control module and at least one sensor arranged to detect flutter movement and to communicate a signal indicating flutter movement to the control module. The control module may determine a cancelation torque response for application to the low pressure drive shaft based on the signal to counteract motion of the low pressure drive shaft imposed by flutter and selectively operates the low pressure motor-generator to achieve the cancelation torque response.

In some embodiments, the flutter control system may include power circuitry adapted to selectively operate the low pressure motor-generator.

In some embodiments, operation of the low pressure motor-generator to achieve the cancelation torque response may include selectively dampening rotation of the low pressure drive shaft by oscillating operation of the low pressure motor-generator between a first power output and a second power output higher than the first.

In some embodiments, oscillating operation of the low pressure motor-generator between the first power output and the second power output may include operation of the low pressure motor-generator in the generation mode.

In some embodiments, oscillating operation of the low pressure motor-generator between the first power output and the second power output may include operation of the low pressure motor-generator in the drive mode.

In some embodiments, the sensor may be configured to detect flutter movement within the blades of the fan.

According to another aspect of the present disclosure, a method of operating a turbofan gas turbine engine of an aircraft having a low pressure spool having a low pressure drive shaft and a low pressure motor-generator coupled to the low pressure drive shaft may include detecting flutter within the gas turbine engine, determining a cancelation torque response for application to the low pressure drive shaft based on the detection of flutter, and operating the low pressure motor-generator to achieve the cancelation torque response.

In some embodiments, operating the low-pressure motor-generator may include selectively dampening rotation of the low pressure drive shaft by oscillating operation of the low pressure motor-generator between a first power output and a second power output higher than the first.

In some embodiments, oscillating operation of the low pressure motor-generator between the first power output and the second power output may include operation of the low pressure motor-generator in a generation mode to generate electric power from driven rotation.

In some embodiments, oscillating operation of the low pressure motor-generator between the first power output and the second power output may include operation of the low pressure motor-generator in a drive mode to electrically drive rotation of the low pressure drive shaft.

These and other features of the present disclosure will become more apparent from the following description of the illustrative embodiments.

### BRIEF DESCRIPTION OF THE DRAWINGS

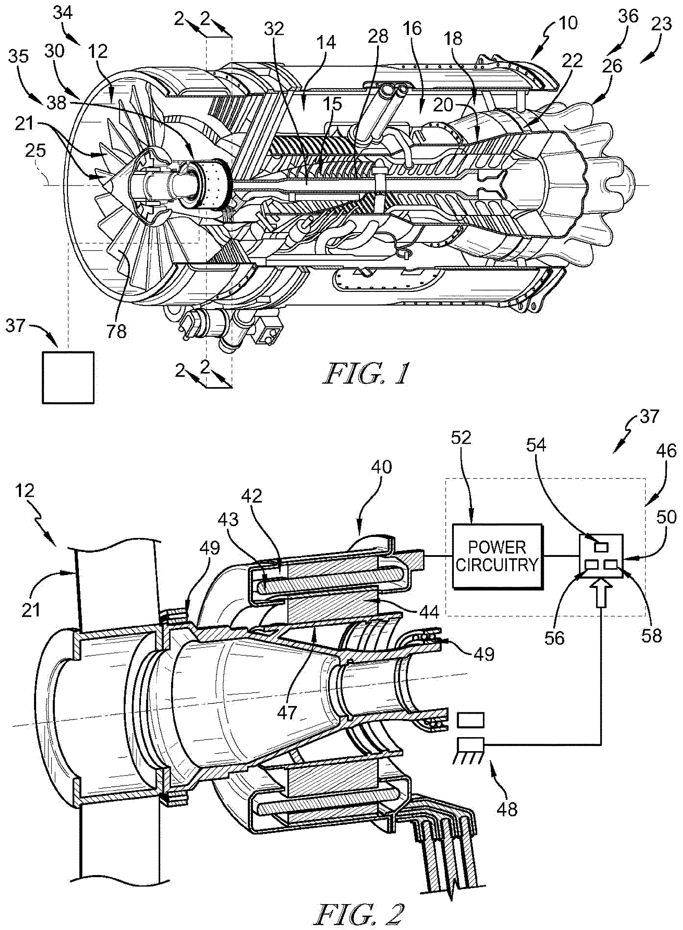

Fig. 1 is a perspective view of an illustrative embodiment of a turbofan gas turbine engine with a portion cut away to show that the gas turbine engine includes a spool assembly including a low pressure (LP) turbine spool having a low pressure (LP) shaft for driven rotation, and showing that the gas turbine engine includes a fan coupled with the LP drive shaft at a forward end to receive driven rotation to draw air into the engine, and a motor-generator assembly including a low pressure motor-generator coupled with the LP drive shaft, a sensor configured to detect movement (such as vibrations) within the engine that results from flutter, and a power controller for selectively operating the LP motor-generator to counteract (at least partially cancel) motion of the LP drive shaft resultant from flutter;
Fig. 2 is a perspective cross-sectional view of a portion of the gas turbine engine of Fig. 1 taken along the plane 2-2 of Fig. 1 showing that the LP motor-generator includes a rotor coupled with the LP drive shaft and a stator arranged about the rotor to communicate electrically therewith, and diagrammatically showing that the power controller is arranged to selectively operate the LP motor-generator as a generator to generate electric power from rotation of the low pressure drive shaft or as an electric motor to assist rotation of the low pressure drive shaft;

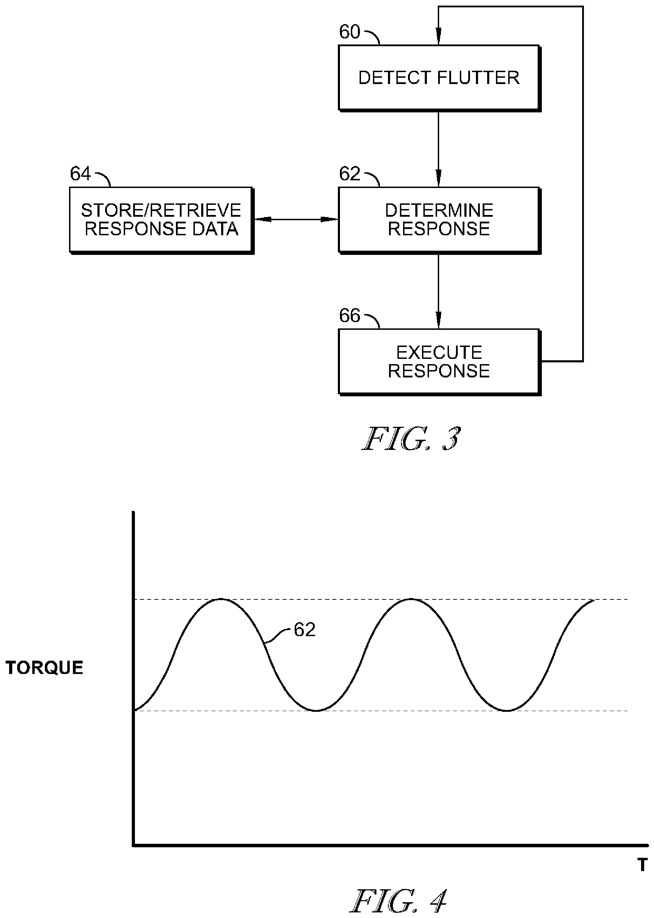

Fig. 3 is a process flow diagram of operation of the gas turbine engine of Figs. 1 and 2 showing that the engine can detect flutter, determine a response for execution by the LP motor-generator to address the flutter, and execute the determined response as operation of the LP motor-generator to counteract the flutter;
Fig. 4 is a chart depicting an exemplary response of the gas turbine engine of Figs. 1 and 2 showing that the exemplary response includes operating the LP motor-generator to oscillate between torque levels to achieve the cancelation torque response to counteract flutter;

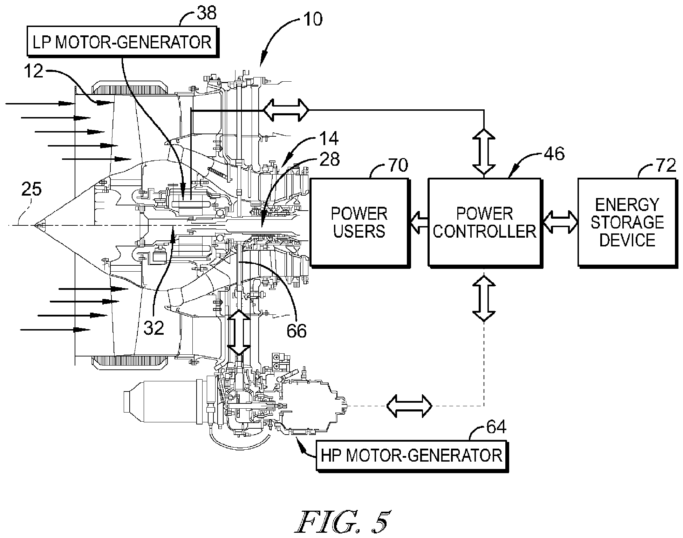

Fig. 5 is a partially diagrammatic view of the gas turbine engine of Figs. 1 and 2 showing that the engine includes a high pressure (HP) motor-generator adapted to be driven for rotation by a high pressure (HP) drive shaft, and showing that the power controller is electrically connected to each of the LP motor-generator and the HP motor-generator and is arranged for selectively operating each of the LP and HP motor-generators independently between the generation modes and the drive modes, and showing that the power controller is connected to communicate electrical power with power users and with an optional energy storage device.

### DETAILED DESCRIPTION OF THE DRAWINGS

For the purposes of promoting an understanding of the principles of the disclosure, reference will now be made to a number of illustrative embodiments illustrated in the drawings and specific language will be used to describe the same.

Gas turbine engines may be adapted for various uses, such as to propel aircraft, watercraft, and/or for power generation. The electrical power demands on gas turbine engines adapted for such uses are rapidly increasing due to the growing number and power requirement of processors, actuators, and accessories. However, drawing additional electric power from high pressure (HP) driven electric generators can limit the operation of the gas turbine engine, for example, by decreasing certain operating margins at peak demand.

The present disclosure includes descriptions of gas turbine engines that include low pressure (LP) motor-generators configured to supply electric power. In certain adapted uses of the engines, for example, when adapted for use in an aircraft, the present disclosure includes devices, systems, and methods for integration of low pressure (LP) motor-generators into turbofan gas turbine engines. Motor-generators include devices that can be selectively operated in a first mode to generate electricity for use in other systems and in a second mode to drive mechanical rotation by consumption of electrical power. Coordinated operation of low pressure (LP) and/or high pressure (HP) motor-generators in response to various operational conditions promotes operational flexibility and power management optimization.

In operation of gas turbine engines, undesirable movement of components can occur under various operating conditions. Such movement can occur as vibrations and/or oscillations outside of normal movement. Such movement may create flutter which can include various resonant movements of the components. Fan flutter, in gas turbine engines having a turbofan arrangement, may include oscillation and/or vibration of blades and/or shafts that drive the fan. Such undesirable movement can deteriorate components and/or reduce engine performance.

As shown in Fig. 1, an illustrative gas turbine engine 10 includes a fan 12, a compressor 28 having a compressor rotor 15, a combustor 16, and a turbine 18 having a high pressure (HP) turbine rotor 20 and a low pressure (LP) turbine rotor 22, housed within a casing 24 as shown in Fig. 1. The fan 12 draws air into the compressor 14 that compresses and delivers the air to the combustor 16. The combustor 16 mixes fuel with the compressed air from the compressor 14 and combusts the mixture. The hot, high-pressure exhaust products of the combustion reaction in the combustor 16 are directed into the turbine 18 to cause rotation of the HP and LP turbine rotors 20, 22 about an axis 25 to drive the compressor 14 and the fan 12, respectively.

In the illustrative embodiment, the gas turbine engine 10 includes a spool assembly 23 including a high pressure (HP) spool 26 and a low pressure (LP) spool 30. The high pressure (HP) spool 26 illustratively comprises the compressor rotor 15, the HP turbine rotor 20, and a high pressure (HP) drive shaft 28 that extends along the axis 25 to couple the compressor 14 for rotation with the HP turbine rotor 20. The low pressure (LP) spool 30 illustratively comprises the fan 12, the LP turbine rotor 22, and a low pressure (LP) drive shaft 32 that extends along the axis 25 to couple the fan 12 for rotation with the LP turbine rotor 22. In some embodiments, the fan 12 may be considered separate from the spool assembly 23. In the illustrative embodiment, the drive shafts 28, 32 are concentric shafts that extend along the axis 25 between forward 34 and aft ends 36 of the engine 10.

In the illustrative embodiment as shown in Fig. 1, the engine 10 includes a motor-generator assembly 35 including a low pressure (LP) motor-generator 38 and a flutter control system 37 for governing operation of the LP motor-generator 38 to counteract the effects of flutter. The low pressure (LP) motor-generator 38 is illustratively arranged between the fan 12 and the compressor 14 along the axis 25. Example of suitable LP motor-generators are disclosed within U.S. Provisional Patent Applications Nos. 62/338,201; 62/338,204; 62/338,205; the contents of which are hereby incorporated by reference in their entirety, including at least the disclosure pertaining to the low pressure (LP) and high pressure (HP) generators 38, 68 and their operation therein. As discussed in additional detail below, the motor-generator assembly 35 illustratively operates to extract and/or provide power to the LP drive shaft 32. In the illustrative embodiment, the flutter control system 37 governs operation of the LP motor-generator 38 to provide torque, for example but without limitation, transient torque, to the LP drive shaft 32 to counteract (cancel at least partially) flutter within the engine 10. The motor-generator 35 illustratively provides active control of flutter effects within the engine 10.

As shown in Fig. 2, the LP motor-generator 38 illustratively includes a motor-generator core 40 having a stator 42 fixed against rotation relative to the LP drive shaft 32 and a rotor 44 coupled to the LP drive shaft 32 for rotation therewith. The rotor 44 is illustratively attached to a mount 47 of the LP drive shaft 32 positioned axially between shaft bearings 49 of the LP drive shaft 32. The stator 42 illustratively includes a number of stator windings 43 positioned radially outward of the rotor 44, such that each stator winding 43 is illustratively arranged in electromagnetic communication with the rotor 44. In some embodiments, the motor-generator core 40 may include any suitable type and/or arrangement of electro-mechanical motor and/or generator. The LP motor-generator 38 is illustratively adapted for selective operation between a generation mode to generate electrical power from rotation of the LP turbine 22 and in a drive mode to receive electrical power for applying rotational force to the LP drive shaft 32. The flutter control system 37 governs operation of the LP motor-generator 38.

As shown in Fig. 2, the flutter control system 37 illustratively includes a power controller 46 and a sensor 48 in communication with the power controller 46 to detect flutter. The power controller 46 illustratively includes a control module 50 and power circuitry 52 in communication with the control module 50 and electrically connected with the LP motor generator 38. The power controller 46 illustratively governs operation of the LP motor-generator 38 to counteract (reduce) flutter within the engine 10.

In the illustrative embodiment as shown in Fig. 2, the power controller 46 illustratively receives at least one signal from the sensor 48 indicating vibrations within the engine 10. In the illustrative embodiment, the sensor 48 is embodied as a resolver arranged to measure flutter induced movement of the LP drive shaft 32 near the LP generator-motor 38, but in some embodiments, may include a suitable number, type, location, arrangement, and/or other configuration to sense flutter induced movement and to permit determination of whether flutter occurs. In some embodiments, the sensor 48 may observe rotor rotational speed. In some embodiments, the sensor 48 may be arranged near the radially outer tips of the blades 21 of the fan 12. The power controller 46 illustratively determines whether flutter is occurring and an appropriate response thereto, responsive to the movement information provided by the sensor 48. If the power controller 46 determines that flutter is occurring, the power controller 46 illustratively communicates the appropriate response (if any) to the LP motor-generator 38 as a torque cancelation response to counteract flutter. In the illustrative embodiment, the sensor 48 is arranged to detect flutter movement as rotational movement of turbine engine components offset from the rotational axis 25, and the power controller 46 determines flutter occurrence based on the flutter movements indicated by the sensor 48.

As shown in Fig. 2, the control module 50 illustratively includes a processor 54, a memory device 56 for storing instructions, and communication circuitry 58. The processor 54 illustratively executes instructions stored on the memory device 56 and communicates signals through the communication circuitry 58. In the illustrative embodiment, the processor 54 illustratively executes instructions, embodied as at least one algorithm, based on the information indicated by the sensor 48 as input(s) to determine whether flutter is occurring and to determine as an output an appropriate response of the LP motor-generator 38. In some embodiments, the power controller 46 may consider various operational factors as input(s) in determining the cancelation torque response, for example, engine speed, operating margins, adapted use factors (aircraft altitude, orientation, payload, etc.), temperatures, cause of flutter conditions, historical and/or predictive data, and/or other factors pertaining to engine 10. In some embodiments, the instructions may include at least one of a lookup table, predetermined factors, and/or any other suitable form for determination.

In the illustrative embodiment, the power controller 46 illustratively operates the LP motor-generator 38 to achieve the appropriate response as a cancelation torque response. The control module 50 illustratively communicates a signal to the power circuitry 52 indicating the appropriate response. The power circuitry 52 illustratively includes circuitry components for regulating operation of the LP motor-generator 38 between the generation and drive modes and a power inverter to share and/or receive power. The power inverter may permit conversion of direct current (DC) provided by the LP motor-generator 38 into alternating current (AC) for various adapted uses. The power circuitry 52 is configured to regulate and/or modify the power dimensions (e.g., voltage and/or current, including frequency, amplitude, etc.) of the LP motor-generator 38 in either of the generation and drive modes.

In the illustrative embodiment as shown in Fig. 3, a process of operational governance of the flutter control system 37 is shown. At block 60, flutter detection is illustratively performed. Flutter detection illustratively includes monitoring movement within portions of the engine 10 and determining whether the movement indicate flutter occurrence. In the illustrative embodiment mentioned above, the sensor 48 illustratively generates a signal indicating sensed movements within the engine 10 for communication to the power controller 46. The power controller 46 illustratively determines whether the signal from the sensor 48 indicates that the engine 10 experiences flutter. If the power controller 46 determines that the engine 10 experiences flutter, the process illustratively proceeds to block 62. If no flutter is determined, flutter detection continues including continued monitoring of movements as indicated by the sensor 48.

As shown in Fig. 3, at block 62 an appropriate response to detection of flutter is determined. The power controller 46 illustratively determines an appropriate response. The power controller 46 determines a cancelation torque response based on the information received from the sensor 48. In determining the appropriate response, response data can be consulted as suggested at block 64. Consultation of response data is illustratively embodied as an option including any of storing, retrieving, managing, updating, manipulating and/or otherwise using data related to response. Such consultation may be embodied, for example but without limitation, updating historical reference information regarding flutter modes based on the input(s) and outputs used by the processor 54 in determining whether flutter occurs and/or the appropriate response. Such consultation can facilitate learning and/or adaptation to conditions of use, individual component conditions, deterioration, factors of other engines and/or components, and/or other active and/or unique qualities. Upon determination of the appropriate response, the process proceeds to block 66.

As shown in Fig. 4, at block 66 the appropriate response is executed. In the illustrative embodiment, the LP motor-generator 38 is operated to achieve the cancelation torque response. The power controller 46 illustratively regulates operation of the LP motor-generator 38 to achieve the cancelation torque response. Upon execution of the response, the process illustratively returns to block 60.

In the illustrative embodiment as shown in Fig. 4, the cancelation torque response includes an operation of the LP motor-generator to counteract (cancel, at least partially) the effects of flutter, including but not limited to vibrations and/or oscillations. In the illustrative embodiment, the cancelation torque response is illustrated by the torque curve 62 as a function of time as shown in Fig. 4.

By non-limiting example, the curve 62 illustratively represents the torque applied by the LP motor-generator 38 whether operating in the generation mode or drive mode. The LP motor-generator 38 illustratively generates electric power through driven rotation by the LP drive shaft 32 and the power output is regulated by the power controller 46 to create the oscillation of the torque curve 62. The oscillation of the torque curve 62 illustratively imposes an oscillation in the rotational force of the LP drive shaft 32.

In the illustrative embodiment, the change in rotational force of the LP drive shaft 32 corresponds with the curve 62 such that the LP drive shaft 32 rotates according to the cancelation torque response as determined by the power controller 46. The particulars of the amplitudes, frequency, phase, curve characteristics (e.g., shape), and/or other power dimensions can vary as part of the active determination of the appropriate response. For example but without limitation, the power controller 46 may determine, according to operational parameters including the information from the sensor 48, that the appropriate response includes a cancellation torque response of the LP motor-generator 38 operating in the drive mode to apply positive torque to the LP drive shaft 32. Thus, the appropriate response can include any functional operation of the LP motor-generator 38 as directed by the power controller 46.

With reference to Fig. 5, the gas turbine engine 1 is shown partially diagrammatically to illustrate operation of the motor-generator assembly 35 including a high pressure (HP) motor-generator 64. In the illustrative embodiment as shown in Fig. 5, the HP motor-generator 64 is coupled to the HP drive shaft 28 with an auxiliary shaft 66 to receive rotational drive from the HP turbine spool 26. The HP motor-generator 64 is illustratively adapted for selective operation in a generation mode to generate electrical power from rotation of the HP turbine rotor 20 or in a drive mode to receive electrical power to assist rotation of the HP drive shaft 28. The power controller 46 is illustratively electrically connected with the HP motor-generator 64 to govern operation thereof according to engine operational conditions.

In the illustrative embodiment, the power controller 46 governs operation of each of the LP and HP motor-generators 38, 64. The power controller 46 is illustratively electrically connected with power users 70 and energy storage device 72. The power controller 46 illustratively regulates electric power distribution throughout the engine 10 according to operational conditions. For example but without limitation, during certain conditions, the power controller 46 may operate each of the LP and HP motor-generators 38, 64 in the generator mode and may distribute electric power to each of the power users 70 and the energy storage device 72. Upon occurrence of flutter, the power controller 46 may operate the LP motor-generator 38 to achieve the appropriate response (as discussed above) and may selectively increase electric power generation of the HP motor-generator 64. In another non-limiting example, the power controller 46 can be arranged in communication with other gas turbine engines each arranged in adapted use to provide power for an aircraft and each having motor-generator assemblies. The power controller 46 can operate the LP motor-generator 38 to achieve the appropriate response to flutter detection and may operate the other engines to generate additional electrical power.

In governing control of LP/HP power generation (including the distribution among multiple engines), the power controller 46 may consider various engine and/or adapted use factors. For example but without limitation, the power controller 46 may consider fuel economy, operational margins (e.g., stall margin), environmental conditions, and/or malfunction pertaining to one or more engines. In some embodiments, the motor-generators disclosed herein may be configured for operation in only one of a power mode and/or a generator mode.

The present disclosure includes devices, systems, and methods for management of flutter within gas turbine engines. Such flutter can imposed bending and/or torque modes onto engine components, for example, fan drive shafts. Active cancelation of resultant torque modes created by flutter can reduce detrimental effects of such torque modes, decreasing wear and failure, and decreasing dissipative forces. Active cancelation can provide a dampening of related modes and/or flutter effects. Active cancelation through in situ motor-generators can reduce additional parts and increase integration within gas turbine engines. For the purposes of description, flutter may include resonant vibrational modes within the gas turbine engine, for example but without limitation, within fan blades and/or shafts. The vibration modes may be mathematically coupled. The devices, system, and methods of the present disclosure can provide a means of cancelling various modes by inducing cancellation responses, for example but without limitation, about the axis 25.

In the illustrative embodiment, the sensor 48 reads motions (such as vibrations) and sends communicates an indication of the motion to the power controller which analyzes the signal and determines whether flutter is occurring, but in some embodiments, the sensor 48 may be configured to determine flutter and communicate the determination to the power controller 46. In some embodiments, the sensor 48 may be a portion of the controller 46 and/or may be omitted and the controller 46 may determine whether flutter is occurring directly, for example but without limitation, by monitoring feedback from the LP and/or HP motor-generators and/or other engine components.

While the disclosure has been illustrated and described in detail in the foregoing drawings and description, the same is to be considered as exemplary and not restrictive in character, it being understood that only illustrative embodiments thereof have been shown and described.

## Claims

1. A gas turbine engine (10) comprising
a spool assembly (23) for rotation about an axis (25), the spool assembly (23) including an LP turbine spool (30) having an LP drive shaft (32) extending along the axis (25),
a fan (12) coupled with the LP drive shaft (32) to receive rotation to draw air into the gas turbine engine (10), the fan (12) including a rotor (15, 20, 22) and a number of blades (21) extending radially from the rotor (15, 20, 22),
a motor-generator assembly (35) including an LP motor-generator (38) mounted on the LP drive shaft (32), a sensor (48) configured to detect flutter movement within the engine, and a power controller (46) in communication with the sensor (48) and electrically connected to the LP motor-generator (38) to detect, the power controller (46) configured to selectively operate the LP motor-generator (38) in response to flutter movement detected by the sensor (48) to counteract flutter,
wherein the power controller (46) includes power circuitry adapted to selective operate the LP motor-generator (38) and a control module (50) in communication with the sensor (48) to receive an indication of flutter movement and with the power circuity to govern selective operation of the LP motor-generator (38),
wherein the control module (50) is configured to determine a cancelation torque response for application to the LP drive shaft (32) required to counteract flutter movement which is transferred from the blades (21) to the LP drive shaft (32),
wherein operation of the LP motor-generator (38) to achieve the cancelation torque response includes selectively dampening rotation of the LP drive shaft (32) by oscillating operation of the LP motor-generator (38) between a first power output and a second power output higher than the first.

2. The gas turbine of claim 1, wherein the LP motor-generator (38) is adapted for selective operation between a generation mode to generate electric power from driven rotation and a drive mode to electrically drive rotation of the LP drive shaft (32), and the power controller (46) is configured to selectively operate the LP motor-generator (38) in either of the generation mode and the drive mode to counteract flutter.

3. The gas turbine engine (10) of one of the preceding claims, wherein the control module (50) governs operation of the LP motor-generator (38) to execute the cancelation torque response onto the LP drive shaft (32).

4. The gas turbine engine (10) of one of the preceding claims, wherein oscillating operation of the LP motor-generator (38) between the first power output and the second power output includes operation of the LP motor-generator (38) in a generation mode to generate electric power from driven rotation.

5. The gas turbine engine (10) of one of the preceding claims 1 to 3, wherein oscillating operation of the LP motor-generator (38) between the first power output and the second power output includes operation of the LP motor-generator (38) in a drive mode to electrically drive rotation of the LP drive shaft (32).

6. The gas turbine engine (10) of one of the preceding claims, wherein the sensor (48) is configured to detect flutter movement within the blades (21) of the fan (12).

7. The gas turbine engine (10) of one of the preceding claims, wherein the sensor (48) is arranged to detect flutter movement of the LP drive shaft (32) and to communicate a signal indicating the flutter movement to the power controller (46).

8. A turbofan gas turbine engine (10) of one of claim 2 comprising
a high pressure spool (26) including a compressor rotor (15, 20, 22), a high pressure turbine rotor (15, 20, 22), a high pressure drive shaft (28) extending along the axis (25) and rotationally coupling the compressor rotor (15, 20, 22) to receive driven rotation about the axis (25) from the high pressure turbine rotor (15, 20, 22), and an high pressure motor-generator adapted for selective operation between a generation mode to generate electric power from driven rotation of the high pressure turbine rotor (15, 20, 22) and a drive mode to electrically drive rotation of the high pressure drive shaft (28), and
a flutter control system (37) electrically connected to the low pressure motor-generator (38) and the high pressure motor-generator (64) and configured to determine operational conditions of the engine and to selectively operate each of the low pressure motor-generator (38) and the high pressure motor-generator (64) in either of the generation mode and the drive mode based on the determined operational conditions of the engine (10).

9. A method of operating a turbofan gas turbine engine (10) of an aircraft comprising the features of one of the preceding claims having a low pressure spool (30), having a low pressure drive shaft (32) and a low pressure motor-generator (38) coupled to the low pressure drive shaft (32), the method comprising:
detecting flutter within the gas turbine engine (10),
determining a cancelation torque response for application to the low pressure drive shaft (32) based on the detection of flutter, and
operating the low pressure motor-generator (38) to achieve the cancelation torque response.

10. The method of claim 9, wherein operating the low-pressure motor-generator includes selectively dampening rotation of the low pressure drive shaft (32) by oscillating operation of the low pressure motor-generator (38) between a first power output and a second power output higher than the first.

11. The method of claim 10, wherein oscillating operation of the low pressure motor-generator (38) between the first power output and the second power output includes operation of the low pressure motor-generator (38) in a generation mode to generate electric power from driven rotation.

12. The method of claim 10, wherein oscillating operation of the low pressure motor-generator (38) between the first power output and the second power output includes operation of the low pressure motor-generator (38) in a drive mode to electrically drive rotation of the low pressure drive shaft (32).

## Patentansprüche

1. Eine Gasturbinenmaschine (10) umfassend
eine Wellenanordnung (23) zur Rotation um eine Achse (25), wobei die Wellenanordnung (23) eine Niederdruck-Turbinenwelle (30) mit einer sich entlang der Achse (25) erstreckenden Niederdruck-Antriebswelle (32) aufweist,
einen Fan (12), der mit der Niederdruck-Antriebswelle (32) gekoppelt ist, um Rotation zu empfangen, um Luft in die Gasturbinenmaschine (10) anzusaugen, wobei der Fan (12) einen Rotor (15, 20, 22) und mehrere Schaufeln (21) aufweist, die sich radial vom Rotor (15, 20, 22) erstrecken,
eine Motor-Generator-Anordnung (35) mit einem Niederdruck-Motor-Generator (38), der an der Niederdruck-Antriebswelle (32) angebracht ist, einem Sensor (48), der dazu eingerichtet ist, Flatterbewegung innerhalb der Maschine zu erfassen, und einem Leistungsregler (46), der mit dem Sensor (48) in Verbindung steht und elektrisch mit dem Niederdruck-Motor-Generator (38) verbunden ist, um zu erfassen, wobei der Leistungsregler (46) dazu eingerichtet ist, den Niederdruck-Motor-Generator (38) in Reaktion auf von dem Sensor (48) erfasste Flatterbewegung selektiv zu betreiben, um Flattern entgegenzuwirken,
wobei der Leistungsregler (46) eine Leistungsschaltung, die dazu angepasst ist, den Niederdruck-Motor-Generator (38) selektiv zu betreiben, und ein Steuermodul (50) aufweist, das mit dem Sensor (48) in Verbindung steht, um eine Anzeige einer Flatterbewegung zu empfangen, und mit der Leistungsschaltung in Verbindung steht, um den selektiven Betrieb des Niederdruck-Motor-Generators (38) zu steuern,
wobei das Steuermodul (50) dazu eingerichtet ist, eine Auslöschdrehmomentreaktion zur Anwendung auf die Niederdruck-Antriebswelle (32) zu bestimmen, die erforderlich ist, um einer Flatterbewegung entgegenzuwirken, die von Schaufeln auf die Niederdruck-Antriebswelle (32) übertragen wird,
wobei der Betrieb des Niederdruck-Motor-Generators (38) zum Erzielen der Auslöschdrehmomentreaktion ein selektives Dämpfen der Rotation der Niederdruck-Antriebswelle (32) durch einen oszillierenden Betrieb des Niederdruck-Motor-Generators (38) zwischen einer ersten Leistungsabgabe und einer zweiten Leistungsabgabe, die höher als die erste ist, beinhaltet.

2. Die Gasturbine nach Anspruch 1, wobei der Niederdruck-Motor-Generator (38) für selektiven Betrieb zwischen einem Erzeugungsmodus zur Erzeugung elektrischer Energie aus angetriebener Rotation und einem Antriebsmodus zum elektrischen Antrieb der Rotation der Niederdruck-Antriebswelle (32) angepasst ist, und der Leistungsregler (46) dazu eingerichtet ist, den Niederdruck-Motor-Generator (38) selektiv entweder im Erzeugungsmodus oder im Antriebsmodus zu betreiben, um Flattern entgegenzuwirken.

3. Die Gasturbinenmaschine (10) aus einem der vorhergehenden Ansprüche, wobei das Steuermodul (50) den Betrieb des Niederdruck-Motor-Generators (38) steuert, um die Auslöschdrehmomentreaktion auf die Niederdruck-Antriebswelle (32) auszuführen.

4. Die Gasturbinenmaschine (10) aus einem der vorhergehenden Ansprüche, wobei der oszillierende Betrieb des Niederdruck-Motor-Generators (38) zwischen der ersten Leistungsabgabe und der zweiten Leistungsabgabe den Betrieb des Niederdruck-Motor-Generators (38) in einem Erzeugungsmodus zur Erzeugung elektrischer Energie aus angetriebener Rotation beinhaltet.

5. Die Gasturbinenmaschine (10) aus einem der vorhergehenden Ansprüche 1 bis 3, wobei der oszillierende Betrieb des Niederdruck-Motor-Generators (38) zwischen der ersten Leistungsabgabe und der zweiten Leistungsabgabe den Betrieb des Niederdruck-Motor-Generators (38) in einem Antriebsmodus zum elektrischen Antrieb der Rotation der Niederdruck-Antriebswelle (32) einschließt.

6. Die Gasturbinenmaschine (10) aus einem der vorhergehenden Ansprüche, wobei der Sensor (48) dazu eingerichtet ist, Flatterbewegung innerhalb der Schaufeln (21) des Fans (12) zu erfassen.

7. Die Gasturbinenmaschine (10) aus einem der vorhergehenden Ansprüche, wobei der Sensor (48) so ausgestaltet ist, dass er Flatterbewegung der Niederdruck-Antriebswelle (32) erfasst und dem Leistungsregler (46) ein die Flatterbewegung anzeigendes Signal mitteilt.

8. Eine Mantelstrom-Gasturbinenmaschine (10) nach einem der Ansprüche 2, umfassend
eine Hochdruckwelle (26) mit einem Verdichterrotor (15, 20, 22), einem Hochdruck-Turbinenrotor (15, 20, 22), einer Hochdruck-Antriebswelle (28), die sich entlang der Achse (25) erstreckt und den Verdichterrotor (15, 20, 22) drehfest koppelt, um vom Hochdruck-Turbinenrotor (15, 20, 22) eine angetriebene Rotation um die Achse (25) zu erhalten, und einem Hochdruck-Motor-Generator, der für den selektiven Betrieb zwischen einem Erzeugungsmodus zur Erzeugung elektrischer Energie aus angetriebener Rotation des Hochdruck-Turbinenrotors (15, 20, 22) und einem Antriebsmodus zum elektrischen Antrieb der Rotation der Hochdruck-Antriebswelle (28) angepasst ist, und
ein Flattersteuersystem (37), das elektrisch mit dem Niederdruck-Motor-Generator (38) und dem Hochdruck-Motor-Generator (64) verbunden ist und dazu eingerichtet ist, Betriebsbedingungen der Maschine zu bestimmen und selektiv sowohl den Niederdruck-Motor-Generator (38) als auch den Hochdruck-Motor-Generator (64) basierend auf den bestimmten Betriebsbedingungen der Maschine (10) entweder im Erzeugungsmodus oder im Antriebsmodus zu betreiben.

9. Ein Verfahren zum Betreiben einer Mantelstrom-Gasturbinenmaschine (10) eines Flugzeugs mit den Merkmalen eines der vorhergehenden Ansprüche mit einer Niederdruck-Welle (30), die eine Niederdruck-Antriebswelle (32) und einen Niederdruck-Motor-Generator (38) aufweist, der mit der Niederdruck-Antriebswelle (32) gekoppelt ist, wobei das Verfahren umfasst:
Erfassen von Flattern innerhalb der Gasturbinenmaschine (10),
Bestimmen einer Auslöschdrehmomentreaktion zur Anwendung auf die Niederdruck-Antriebswelle (32) auf der Grundlage des Erfassens von Flattern, und
Betrieb des Niederdruck-Motor-Generators (38) zur Erzielung der Auslöschdrehmomentreaktion.

10. Das Verfahren aus Anspruch 9, wobei der Betrieb des Niederdruck-Motor-Generators ein selektives Dämpfen der Rotation der Niederdruck-Antriebswelle (32) durch einen oszillierenden Betrieb des Niederdruck-Motor-Generators (38) zwischen einer ersten Leistungsabgabe und einer zweiten Leistungsabgabe, die höher als die erste ist, beinhaltet.

11. Das Verfahren aus Anspruch 10, wobei der oszillierende Betrieb des Niederdruck-Motor-Generators (38) zwischen der ersten Leistungsabgabe und der zweiten Leistungsabgabe den Betrieb des Niederdruck-Motor-Generators (38) in einem Erzeugungsmodus zur Erzeugung elektrischer Energie aus angetriebener Rotation beinhaltet.

12. Das Verfahren aus Anspruch 10, wobei der oszillierende Betrieb des Niederdruck-Motor-Generators (38) zwischen der ersten Leistungsabgabe und der zweiten Leistungsabgabe den Betrieb des Niederdruck-Motor-Generators (38) in einem Antriebsmodus zum elektrischen Antrieb der Rotation der Niederdruck-Antriebswelle (32) umfasst.

## Revendications

1. Moteur de turbine à gaz (10) comprenant :
un ensemble de bobine (23) destiné à la rotation autour d'un axe (25), l'ensemble de bobine (23) comprenant une bobine de turbine à faible pression (30) ayant un arbre d'entraînement à faible pression (32), qui s'étend le long de l'axe (25),
un ventilateur (12) couplé à l'arbre d'entraînement à faible pression (32) pour recevoir une rotation pour tirer de l'air dans le moteur de turbine à gaz (10), le ventilateur (12) comprenant un rotor (15, 20, 22) et un nombre de pales (21), qui s'étendent radialement à partir du rotor (15, 20, 22),
un ensemble de génératrice moteur (35) comprenant une génératrice-moteur à faible pression (38), un capteur (48) configuré pour détecter un mouvement irrégulier à l'intérieur du moteur et un contrôleur de puissance (46) en communication avec le capteur (48 et électriquement relié à la génératrice-moteur à faible pression (38) pour détecter, le contrôleur de puissance (46) étant configuré pour faire sélectivement fonctionner la génératrice-moteur à faible pression (38) en réaction à un mouvement irrégulier détecté par le capteur (48) pour contrecarrer le mouvement irrégulier,
dans lequel le contrôleur de puissance (46) comprend un circuit de puissance adapté pour faire sélectivement fonctionner la génératrice-moteur à faible pression (38) et un module de commande (50) en communication avec le capteur (48) pour recevoir un indice de mouvement irrégulier et avec le circuit de puissance pour gérer le fonctionnement sélectif de la génératrice-moteur à faible pression (38),
dans lequel le module de commande (50 est configuré pour déterminer un couple d'annulation de réponse pour l'appliquer à l'arbre d'entraînement à faible pression (32) nécessaire pour contrecarrer le mouvement irrégulier, qui est transmis des pales (21) à l'arbre d'entraînement à faible pression (32),
dans lequel le fonctionnement de la génératrice-moteur à faible pression (38) pour obtenir le couple d'annulation de réponse comprend l'amortissement sélectif de la rotation de l'arbre d'entraînement à faible pression (32) en faisant osciller le fonctionnement de la génératrice-moteur à faible pression (38) entre une première sortie de puissance et une deuxième sortie de puissance plus élevée que la première.

2. Turbine à gaz selon la revendication 1, dans laquelle la génératrice-moteur à faible pression (38) est adaptée pour un fonctionnement sélectif entre un mode de génération pour générer de la puissance électrique à partir d'une rotation entraînée et un mode d'entraînement pour entraîner électriquement la rotation de l'arbre d'entraînement à faible pression (32), et le contrôleur de puissance (46) est configuré pour faire sélectivement fonctionner la génératrice-moteur à faible pression (38) dans soit le mode de génération soit le mode d'entraînement pour contrecarrer un mouvement irrégulier.

3. Moteur de turbine à gaz (10) selon l'une des revendications précédentes, dans lequel le module de commande (50) gère le fonctionnement de la génératrice-moteur à faible pression (38) pour exécuter le couple d'annulation de réponse sur l'arbre d'entraînement à faible pression (32).

4. Moteur de turbine à gaz (10) selon l'une des revendications précédentes, dans lequel le fonctionnement oscillant de la génératrice-moteur à faible pression (38) entre la première sortie de puissance et la deuxième sortie de puissance comprend le fonctionnement de la génératrice-moteur à faible pression (38) dans un mode de génération pour générer de la puissance électrique à partir d'une rotation entraînée.

5. Moteur de turbine à gaz (10) selon l'une des revendications précédentes 1 à 3, dans lequel le fonctionnement oscillant de la génératrice-moteur à faible pression (38) entre la première sortie de puissance et la deuxième sortie de puissance comprend le fonctionnement de la génératrice-moteur à faible pression (38) dans un mode d'entraînement pour électriquement entraîner la rotation de l'arbre d'entraînement à faible pression (32).

6. Moteur de turbine à gaz (10) selon l'une des revendications précédentes, dans lequel le capteur (48) est configuré pour détecter un mouvement irrégulier à l'intérieur des pales (21) du ventilateur (12).

7. Moteur de turbine à gaz (10) selon l'une des revendications précédentes, dans lequel le capteur (48) est disposé pour détecter un mouvement irrégulier de l'arbre d'entraînement à faible pression (32) et pour communiquer un signal, qui indique le mouvement irrégulier, au contrôleur de puissance (46).

8. Moteur de turbine à gaz turbosoufflante (10) selon la revendication 2 comprenant :
une bobine à haute pression (26) comprenant un rotor de compresseur (15, 20, 22), un rotor de turbine à haute pression (15, 20, 22), un arbre d'entraînement à haute pression (28), qui s'étend le long de l'axe (25) et qui couple de manière rotative le rotor de compresseur (15, 20, 22) pour recevoir une rotation entraînée autour de l'axe (25) à partir du rotor de turbine à haute pression (15, 20, 22), et une génératrice-moteur à haute pression adaptée pour le fonctionnement sélectif entre un mode de génération pour générer de la puissance électrique par moyen de la rotation entraînée du rotor de turbine à haute pression (15, 20, 22) et un mode d'entraînement pour entraîner électriquement la rotation de l'arbre d'entraînement à haute pression (28), et
un système de contrôle de mouvement irrégulier (37) relié électriquement à la génératrice-moteur à faible pression (38) et à la génératrice-moteur à haute pression (64) et configuré pour déterminer des conditions de fonctionnement du moteur et pour faire sélectivement fonctionner chacune de la génératrice-moteur à faible pression (38) et de la génératrice-moteur à haute pression (64) dans soit le mode de génération soit le mode d'entraînement sur la base des conditions de fonctionnement déterminées du moteur (10).

9. Procédé de fonctionnement d'un moteur de turbine à gaz turbosoufflante (10) d'un avion comprenant les caractéristiques de l'une des revendications précédentes ayant une bobine à faible pression (30, ayant un arbre d'entraînement à faible pression (32) et une génératrice-moteur à faible pression (38) couplée à l'arbre d'entraînement à faible pression (32), le procédé comprenant les étapes de :
détecter un mouvement irrégulier à l'intérieur du moteur de turbine à gaz (10), déterminer un couple d'annulation de réponse pour l'appliquer à l'arbre d'entraînement à faible pression (32) sur la base de la détection du mouvement irrégulier, et
faire fonctionner la génératrice-moteur à faible pression (38) pour obtenir le couple d'annulation de réponse.

10. Procédé selon la revendication 9, dans lequel le fonctionnement de la génératrice-moteur à faible pression comprend l'amortissement sélectif de la rotation de l'arbre d'entraînement à faible pression (32) par moyen d'un fonctionnement oscillant de la génératrice-moteur à faible pression (38) entre une première sortie de puissance et une deuxième sortie de puissance plus élevée que la première.

11. Procédé selon la revendication 10, dans lequel le fonctionnement oscillant de la génératrice-moteur à faible pression (38) entre la première sortie de puissance et la deuxième sortie de puissance comprend le fonctionnement de la génératrice-moteur à faible pression (38) dans un mode de génération pour générer de la puissance électrique par moyen d'une rotation d'entraînement.

12. Procédé selon la revendication 10, dans lequel le fonctionnement oscillant de la génératrice-moteur à faible pression (38) entre la première sortie de puissance et la deuxième sortie de puissance comprend le fonctionnement de la génératrice-moteur à faible pression (38) dans un mode d'entraînement pour entraîner électriquement la rotation de l'arbre d'entraînement à faible pression (32).
